# EUROPEAN PATENT SPECIFICATION

(11) **EP 3 909 556 B1**
(45) Date of publication and mention of the grant of the patent: **15.03.2023**
(21) Application number: 21173168.2
(22) Date of filing: 10.05.2021
(51) Int. Cl.: A61G 10/00, A61C 19/00, A61G 15/10

(54) **EQUIPMENT FOR PREVENTING THE DISPERSION OF AEROSOL AND/OR SECRETIONS**
AUSRÜSTUNG ZUR VERHINDERUNG DER DISPERSION VON AEROSOL UND/ODER SEKRETEN
ÉQUIPEMENT POUR EMPÊCHER LA DISPERSION D'AÉROSOL ET/OU DE SÉCRÉTIONS

(30) Priority: 08.05.2020 PT 2020116352; 05.08.2020 PT 2020116630
(43) Date of publication of application: 17.11.2021
(73) Proprietor: Silva Gonçalves, António Miguel, P-2410-187 Leiria (PT)
(72) Inventor: Silva Gonçalves, António Miguel, P-2410-187 Leiria (PT)
(74) Representative: Lourenço Martinho do Rosário, Ana Margarida

(56) References cited:
- CN-A- 111 407 585
- CN-U- 212 789 083
- US-A- 4 932 098
- US-B1- 10 905 839
- US-B2- 10 251 801

## Description

### Scope of the invention

The present invention relates generally to the health safety equipment field, more specifically to an equipment to be used by a patient in a medical-dental office environment, intended for blocking the dispersion of aerosol and/or secretions, which may contain blood, saliva or water droplets, so common in the practice of such practices.

### Framework of the Invention

Ever since mankind realized that many of the existing diseases are infectious diseases caused by pathogens, such as viruses, bacteria, fungi or parasites, has been trying to understand how transmission occurs and how it can be prevented. And realized that some of these diseases are transmissible either by direct contact or by respiratory tract, via droplets or aerosol. In the case of droplet or aerosol transmission, it occurs via very small particles that leave the body patient by coughing, sneezing or speaking, and enter the receiving body through the mucous membranes of eyes, nose or mouth.

It is therefore natural that the professionals, due to their proximity to the patient or the need to perform invasive actions on the body of the patient, try to protect themselves from the transmission of pathogens, or from transmitting them, either by wearing appropriate clothing or by wearing suitable accessories, such as gloves or masks.

There are, however, professions in which protection against the aerosols and/or secretions expelled by the user/patient is of particular importance. It is the case of medical dental professionals, who deal directly with aerosols expelled from the mouth of the patients. These aerosols and/or secretions, which may contain saliva and/or blood, being therefore a source of potential contamination, are not only a source of direct problem for professionals, but also an indirect source for other users, once they are easily dispersed throughout the facilities, becoming, that way, a potential source of contamination for any user of that facility.

Thus, the need arose to develop equipment to protect not only the professional, but also the user and the facilities.

### Background of the invention

To date most protection equipment are equipment to be placed on the professional.

An example of one of these equipment is presented in document GB2205501A, which refers to a "Protective screen for dentistry", or in document JPS63290563A, which presents a "protective visor for dentists".

Other documents refer to equipment intended for placement on users, for instance, the document US6079980A, which refers a "Dental patient face mask".

The document CN111407585A refers to a "Protective cover for operation of oral comprehensive diagnosis and treatment table". US10251801 discloses a foldable protecting cover.

### Advantages of the invention

The present equipment has the great advantage of being an equipment to be put on the patient, therefore preventing any environmental contamination at the source, by isolating the head of the patient, in a comfortable and practical way, and by allowing the professional to have a good view and access to the mouth of the patient, so that he can carry out the necessary procedures. The compact way of preventing the dispersion of any aerosol and/or secretion is blocked: the device only involves the patient's head and torso of the patient, limiting suction to a restricted area.

Once the equipment completely isolates the potential source of contamination, the patient and the professional safety increases, diminishing, or even avoiding, both the need for change of the safety equipment used by the professional after each consultation, and the need for thorough hygiene of the office where the consultation took place. In addition to reducing the visual discomfort of the patient, so that the patient does not feel so intimidated by the intervention that he/she is going to undergo, the equipment also has the following advantages:
- Low levels of noise emission;
- It forces the dentist to a most correct posture, reducing the risk of future muscular complications;
- The distance of about 35 to 40 cm between the patient and the professional allows the patient to feel less constrained by the proximity of the professional whilst allowing for an adequate working distance;
- the use of the superior rod of the supporting structure of the membrane as an armrest, not only allows the professional to relax his arm but also by pressing on the membrane itself allowing a clearer view of the oral cavity trough the membrane.

### Brief description of the figures

These and other characteristics can be easily understood through the accompanying drawings, which should be considered mere examples, not restrictive in any way, within the scope of the invention. In the drawings, and for illustrative purposes, the measurements of some of the elements may be exaggerated and not drawn to scale. The absolute and relative dimensions do not correspond to the real relations for the implementation of the invention.

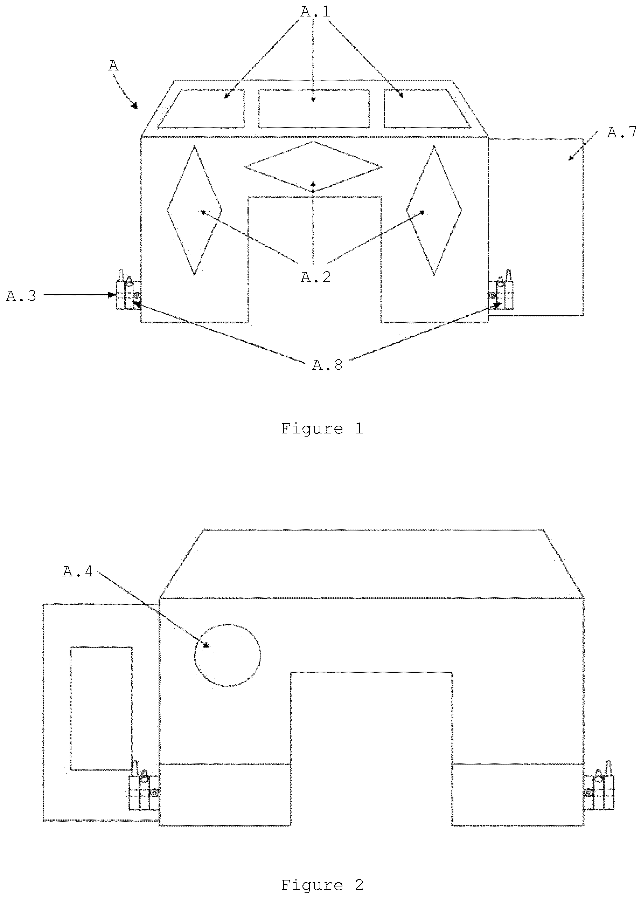

Figure 1 shows a front view of the core of the equipment of the invention.
Figure 2 shows a rear view of the core of the equipment invention.

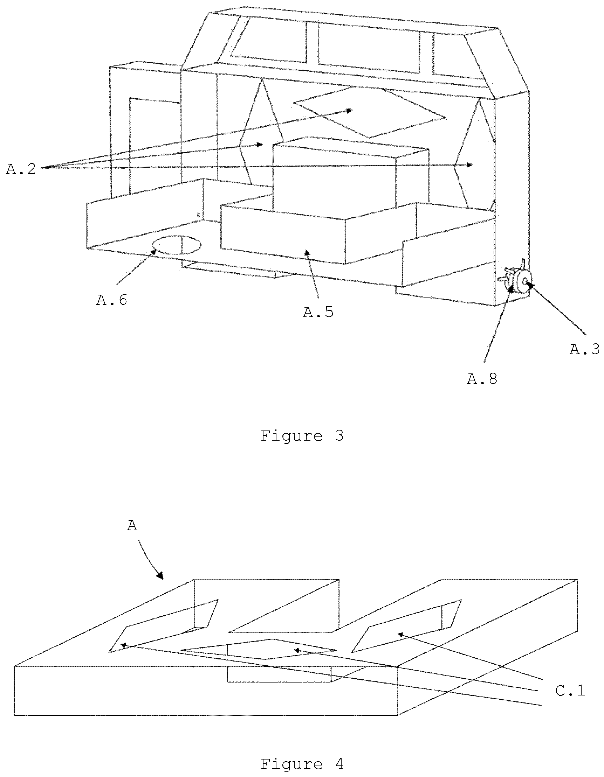

Figure 3 shows a rear perspective view of the core of the equipment of the invention, with the rear wall opened, making it possible to observe the interior of the core with the support of the receptacle in the maintenance position.
Figure 4 shows a front perspective view of the receptacle of the equipment of the invention.

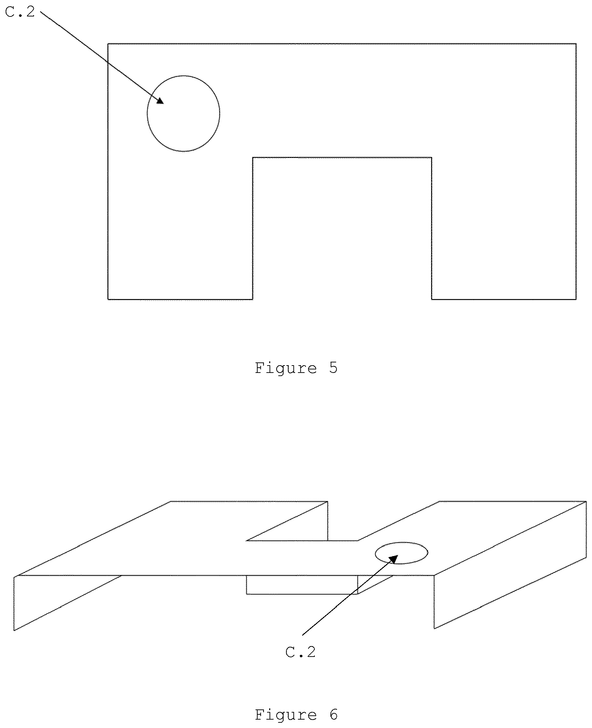

Figure 5 shows a rear view of the receptacle of the equipment of the invention.
Figure 6 shows a rear perspective view of the receptacle of the equipment of the invention.

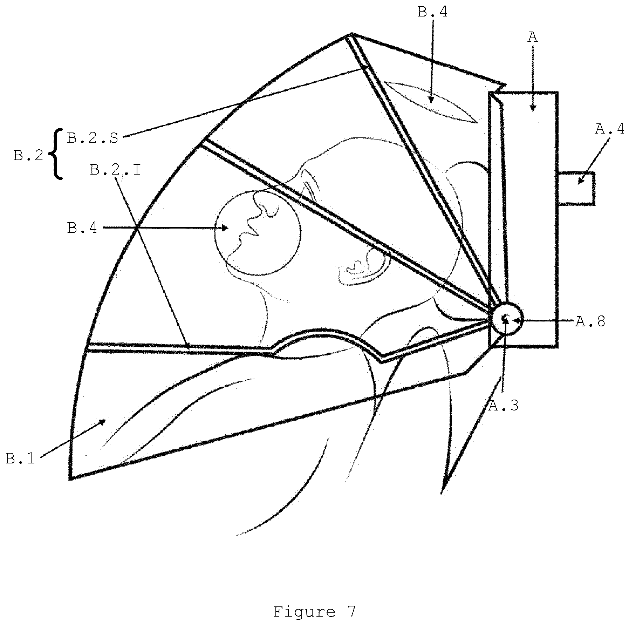

Figure 7 displays a view of the membrane in a stretched position.

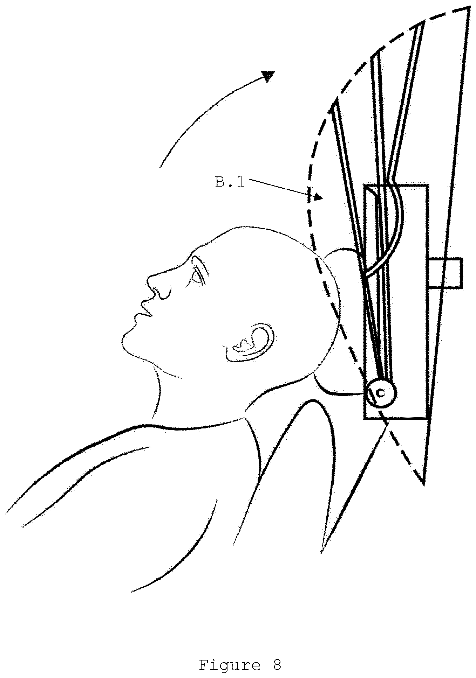

Figure 8 shows a view of the membrane in a folded position.

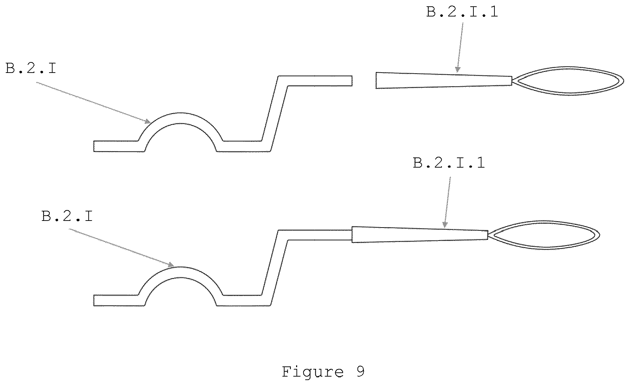

Figure 9 shows a view of the extensor and of the inferior rod of the structure support.

In a preferred embodiment:
A - Core
   A.1 - Sensor opening
   A.2 - Air outlets
   A.3 - Rotation axle
   A.4 - Suction hole
   A.5 - Receptacle support
   A.6 - Opening of the receptacle support
   A.7 - Console
   A.8 - Rods fitting
B - Membrane
   B.1 - Cover
   B.2 - supporting structure
      B.2.S - Superior rod
      B.2.I - Inferior rod
         B.2.3.1 - Extensor
   B.3 - Working openings
C - Receptacle
   C.1 - Air inlets
   C.2 - Receptacle opening

### Detailed description of the invention

By "medical dental intervention" is meant any and every intervention carried out in the human body through the mouth, namely the interventions carried out by dentists, hygienists, dental technicians or otorhinolaryngologists.

The shape "rectangular parallelepiped" is understood as a preferential shape for the invention to be made, and it may work with other formats.

By "extended position" of the membrane (B) is meant that the membrane is in such a way that the membrane cover (B.1) is stretched.

By "retracted position" of the membrane (B) is meant that the membrane is in such a way that the membrane cover (B.1) is folded.

Referring to the figures, the present invention refers to an individual disposable protection equipment, specially designed for use in a medical dental practice environment, intended to prevent the dispersion of aerosol and/or secretions, which may contain blood, saliva or water drops, that are common when conducting such practices.

The equipment consists of a core (A) which may be attached to the chair of the patient, includes the means for fitting the membrane (B), the suction and filtering systems, which prevent the passage to the outside of any secretion and/or aerosols expelled by the patient and also the biometric data installation system.

In an embodiment, the core (A) has a rectangular parallelepiped shape with a tunnel opening for fitting in a dental chair. On the front wall, the core (A) incorporates at least one sensor opening (A.1) where the sensors measuring the vital signs of the patient are placed, one air outlet (A.2) to allow the air and secretions and/or aerosols expelled by the patient, during the medical dental intervention, to be exhausted from the space between the patient and the membrane (B). On the side walls of the core (A), the rod fittings (A.8) which are coupled to the rotation axle (A.3) allow the membrane (B) to attach to the core (A). Additionally, the core (A) incorporates a console (A.7) in which are integrated the processing unit and a set of buttons for operating the equipment.

The processing unit is namely, but not limited to, a tablet on which the equipment operating professional can view the patient data, i.e. the clinical record, the data collected through the sensors previously connected to the patient and also information concerning the operation of the equipment.

The rear wall of the core (A) is foldable to allow access to the interior of the core (A) and it integrates the suction hole (A.4) to place the suction duct for the total external filter.

Inside the core (A) are located the equipment and cables necessary for the equipment functioning, as well the receptacle (C) belonging to the filtering system.

The filtering system consists of the receptacle (C) and an exhaust pipe that connects the receptacle (C) to the suction unit, which incorporates a total filter.

The receptacle (C) has a rectangular parallelepiped shape, is made of an absorbent material and incorporates in the front wall at least one air inlet (C.1) for admission of the air expelled by the patient, which when properly assembled, contacts the back of the front wall of the core (A). The number of air outlets (A.2) and air inlets (C.1) is the same. The air outlets (A. 2) placed in the rear wall of the core (A) and the air inlet (C.1) placed in the front wall of the receptacle (C) are substantially aligned with each other, so that the air passing through the air outlets (A.2) can pass directly to the air inlets (C.1).

The air inlets (C.1) are covered with a filtering membrane to retain almost all, if not all, the contaminants that may exist in the air expelled by the patient. Since the receptacle (C) is made of an absorbent material, the larger particles, namely secretions or blood, are retained in this absorbent material.

The receptacle (C) has a filtering membrane inside, along its entire length and width, to retain any particles that may have passed through the first filtering barrier, which is made up of the filtering membranes placed at the air inlets (C.1).

The rear wall of the receptacle (C) has a receptacle opening (C.2) for introduction of the exhaust pipe, which connects the receptacle (C) to the total filter. The referred receptacle opening (C.2) is substantially aligned with the opening of the receptacle support (A.6), in order to allow the exhaust pipe to reach the receptacle opening (C.2).

The receptacle (C) fits into the receptacle support (A.5) which, by rotating on the axes that fix it to the core (A), allows the receptacle (C) to be placed in a substantially vertical position, i.e. in the position suitable for equipment operation, or in a substantially horizontal position, i.e. in the position suitable for maintenance, namely so that the receptacle (C) can be replaced.

The space within the core (A) not occupied by the receptacle (C) is intended for the placement of the equipment necessary for the equipment of the invention to work, namely, the motor that sets the rotation axle (A. 3) into motion to make the membrane (B) move, the processing units, and also the electrical cables and the data cables.

The membrane (B) consists of a cover (B.1) made of a transparent and malleable material, which is supported by the supporting structure (B.2) made of a malleable material and integrating at least three rods of the supporting structure (B.2), and which is connected to the core (A) by the interlocking of the rods of supporting structure (B.2) to the rod fittings (A.8). The rotation axle (A.3), on which the rod fittings (A.8) are properly fixed, serves as axis of rotation for the rods of the supporting structure (B.2), so that the cover (B.1) can be folded and stretched. The cover (B.1) has at least one working opening (B.3) so that both the materials and equipment necessary to carry out the medical dental intervention, and the hands of the professionals that are going to carry out the intervention, can be introduced into the space formed between the cover (B.1) and the user.

The superior rod (B.2.S) also serves as an armrest of the professional, not only allowing the professional to relax his arm, as the pressing of the supporting structure (B.2) functions as an extender of the membrane (B), as it increases the pressure exerted on the membrane (B) allowing a clearer visualization of the oral cavity through the membrane (B). The inferior rod (B.2.I) incorporates an extensor (B.2.I.1) for adjusting, if necessary, the tension of the membrane (B) .

The deformation caused in the support structure (B.2) by the pressure exerted by the professional on the superior rod (B.2.S) blocks the entry of air into the space between the cover (B.1) and the patient, thus reducing the air that is expelled from the equipment.

### Operating method

With the membrane (B) in retracted position, the patient sits in the chair of the patient, after which the membrane (B) is placed in the extended position, covering the face and trunk of the patient. Simultaneously, the professional, by means of the console (A7), accesses the data of the patient through the processing unit.

The membrane (B) is placed in the extended position by rotation of the rotation axle (A.3) which causes the rod fittings (A.8) to move, causing the rods of the supporting structure (B.2) to move, stretching the membrane.

In a preferred embodiment, the rotation axle (A.3) is started by a motor which is activated by a button placed on the console (A.7). In a second embodiment, the rotation axle (A.3) is set in motion by a handle attached to the axis of rotation (A.3).

Then, through the reading of data obtained from the sensors previously placed on the patient, it is checked whether the patient meets the indispensable health conditions for the intervention to be carried out. It is also checked if the equipment is working correctly, namely if the filters are unobstructed and if the suction system works efficiently, in order to ensure that the air and any eventual secretion expelled by the patient are properly evacuated and retained by the filters.

The unit integrating the suction motor and the total filter is put into work.

The medical dental intervention is then started. To do so, the professional passes the necessary hand or hands, as well as the instruments needed for the procedure execution through the working openings (B.3) existing in the cover (B.1) of the membrane (B).

Since the suction motor is running, the air and any eventual secretion or aerosols expelled by the user are sucked into the air outlets (A. 2) of the core (A). Once the air inlets (C.1) of the receptacle (C) are substantially aligned with the air outlets (A.2), the air expelled by the user is directed to the air inlets (C.1). As the interior of the receptacle (C) and the air inlets (C.1) are equipped with filter membranes, the contaminants that may exist in the air, in the secretions or in the aerosols will be, totally or partially, retained on these filter membranes. Being the walls of the receptacle (C) made of absorbent material, the heavier particles that may escape from filter membranes are trapped on these walls. The air is then directed to the receptacle opening (C.2), from there to the opening of the receptacle support (A.6), then to the suction hole (A.4) and finally, through the suction duct, to the total outer filter. Free of any contaminant, the air is then reintroduced into the environment.

## Claims

1. Equipment for preventing the dispersion of aerosol and/or secretions for fitting into a dental chair consisting of a core (A) and a membrane (B),
- the core (A) comprising a rotation axle (A.3) and rod fittings (A.8) fixed to the rotation axle (A.3),
- the membrane (B) comprising a cover (B.1) and a supporting structure (B.2) made up of rods,
wherein
- the core (A) comprises means for fitting into the dental chair,
- the cover (B.1) is supported by the rods of the supporting structure (B.2), coupled to the core (A) by the interlocking of the rods of the supporting structure (B.2) to the rod fittings (A.8),
- the supporting structure (B.2) rotates on the rotation axle (A.3).

2. Equipment according to the preceding claim wherein the equipment further comprises a receptacle (C).

3. Equipment according to claim 2 wherein the receptacle (C) is made of an absorbent material and has a filtering membrane inside, along its entire length and width, fits into a receptacle support (A.5) and contacts the back of a front wall of the core (A).

4. Equipment according to any preceding claims wherein the core (A) further comprises at least one air outlet (A.2) located in a rear wall of the core (A).

5. Equipment according to any preceding claims wherein the receptacle (C) comprises at least one air inlet (C.1) located in a front wall of the receptacle (C).

6. Equipment according to any preceding claims wherein the number of air outlets (A.2) and the number of air inlets (C.1) is the same and each air outlet (A.2) is substantially aligned with an air inlet (C.1).

7. Equipment according to any preceding claims wherein the receptacle (C) further comprises a receptacle opening (C.2) for introduction of an exhaust pipe, connecting the receptacle (C) to a total filter.

8. Equipment according to any preceding claims wherein the cover (B.1) is made of a transparent and malleable material.

9. Equipment according to any preceding claims wherein the supporting structure (B.2) is made of a malleable material.

10. Equipment according to any preceding claims wherein the supporting structure (B.2) integrates at least three rods of the supporting structure (B.2).

11. Equipment according to according to any preceding claims wherein the core (A) further comprises at least a sensor opening (A.1) for placing the sensors measuring the vital signs of the patient and a console (A. 7) where are integrated the processing unit and a set of buttons for operating the equipment, a suction hole (A.4) and an opening of the receptacle support (A.6).

12. Equipment according to according to any preceding claims wherein the membrane (B) further comprises at least a working opening (B.3).

13. Equipment according to any preceding claims wherein the equipment further comprises a suction motor and a total filter.

14. Method for preventing the dispersion of aerosols and/or secretions in a medical dental intervention comprising the following steps:
a) fitting of an equipment claimed in the previous claims in a dental chair;
b) with the membrane (B) in the retracted position, the patient sits in the chair of the patient;
c) the membrane (B) is placed in the extended position, covering the face and trunk of the patient;
d) the professional, by means of the console (A.7), accesses the data of the patient through the processing unit;
e) it is checked whether the patient meets the indispensable health conditions for the intervention to be carried out;
f) it is also checked that the equipment is working correctly, namely if the filters are unobstructed and if the suction system works efficiently;
g) the suction motor and the total filter are put into work;
h) the professional inserts the necessary hand or hands, as well as the instruments needed for the procedure execution through the working openings (B.3);
i) the air and any eventual aerosols and/or secretions expelled by the user are sucked into the air outlets (A.2);
j) the air expelled and any eventual aerosols and/or secretions expelled by the user is directed to the air inlets (C.1);
k) the contaminants that may exist in the air, in the aerosols or in the secretions are, totally or partially, retained on the filtering membrane covering the air inlets (C.1) and in the filtering membrane equipping the receptacle (C);
l) the heavier particles that may escape from the filter membranes are trapped on the walls of the receptacle (C) ;
m) the air is then directed to the receptacle opening (C.2), then to the opening of the receptacle support (A.6), then to the suction hole (A.4) and finally, through the suction duct, to the total filter;
n) the air is then reintroduced into the environment.

## Patentansprüche

1. Vorrichtung zur Verhinderung der Ausbreitung von Aerosolen und/oder Absonderungen zur Anbringung an einem zahnmedizinischen Behandlungsstuhl, bestehend aus einem Kern (A) und einer Membran (B),
- wobei der Kern (A) eine Rotationsachse (A.3) und eine Gestängebefestigung (A.8) aufweist, die an der Drehachse (A.3) befestigt sind,
- und die Membran (B) eine Abdeckung (B.1) und eine Haltestruktur (B.2) aus Stäben umfasst,
und
- der Kern (A) Mittel zum Anbringen am Behandlungsstuhl umfasst,
- wobei die Abdeckung (B.1) von den Stäben der Haltestruktur (B.2) getragen wird, die durch die Verriegelung der Stäbe der Haltestruktur (B.2) mit der Gestängebefestigung (A.8) mit dem Kern (A) verbunden sind,
- und die Haltestruktur (B.2) sich um die Rotationsachse dreht (A.3).

2. Vorrichtung nach dem vorhergehenden Anspruch , wobei die Vorrichtung ferner einen Behälter (C) umfasst.

3. Vorrichtung nach Anspruch 2, wobei der Behälter (C) aus einem absorbierenden Material besteht und im Inneren eine Filtermembran aufweist, die über ihre gesamte Länge und Breite in einen Behälterträger (A.5) passt und die Rückseite einer Vorderwand des Kerns (A) berührt.

4. Vorrichtung nach einem der vorhergehenden Ansprüche, wobei der Kern (A) außerdem mindestens einen Luftauslass (A.2) umfasst, der sich in einer Rückwand des Kerns (A) befindet.

5. Vorrichtung nach einem der vorhergehenden Ansprüche, wobei der Behälter (C) mindestens einen Lufteinlass (C.1) umfasst, der sich in einer Vorderwand des Behälters (C) befindet.

6. Vorrichtung nach einem der vorhergehenden Ansprüche, wobei die Anzahl der Luftauslässe (A.2) und die Anzahl der Lufteinlässe (C.1) gleich ist und jeder Luftauslass (A.2) im Wesentlichen auf einen Lufteinlass (C.1) ausgerichtet ist.

7. Vorrichtung nach einem der vorhergehenden Ansprüche, wobei der Behälter (C) ferner eine Behälteröffnung (C.2) zum Einführen eines Abluftrohrs aufweist, das den Behälter (C) mit einem Hauptfilter verbindet.

8. Vorrichtung nach einem der vorhergehenden Ansprüche, wobei die Abdeckung(B.1) aus einem transparenten und verformbaren Material besteht.

9. Vorrichtung nach einem der vorhergehenden Ansprüche, wobei die Haltestruktur (B.2) aus einem verformbaren Material besteht.

10. Vorrichtung nach einem der vorhergehenden Ansprüche, wobei die Haltestruktur (B.2) mindestens drei Stäbe dieser Haltestruktur (B.2) integriert.

11. Vorrichtung nach einem der vorhergehenden Ansprüche, wobei der Kern (A) ferner mindestens eine Sensoröffnung (A.1) zum Anbringen der Sensoren, die die Vitalparameter des Patienten messen, und eine Konsole (A.7) umfasst, in der die Prozessoreinheit und eine Reihe von Tasten zur Bedienung der Vorrichtung, ein Saugloch (A.4) und eine Öffnung des Behälterträgers (A.6) integriert sind.

12. Vorrichtung nach einem der vorhergehenden Ansprüche, wobei die Membran (B) ferner mindestens eine Arbeitsöffnung (B.3) aufweist.

13. Vorrichtung nach einem der vorhergehenden Ansprüche, wobei die Vorrichtung ferner einen Saugmotor und einen Hauptfilter umfasst.

14. Verfahren zur Verhinderung der Ausbreitung von Aerosolen und/oder Absonderungen bei einem zahnmedizinischen Eingriff, das die folgenden Schritte umfasst:
a) Anbringung einer Vorrichtung nach den vorhergehenden Ansprüchen an einem zahnmedizinischen Behandlungsstuhl;
b) bei eingeklappter Membran (B) sitzt der Patient auf dem Patientenstuhl;
c) die Membran (B) wird in ausgeklappte Position gebracht und bedeckt das Gesicht und den Oberkörper des Patienten;
d) die Fachkraft greift mittels Konsole (A.7) über die Prozessoreinheit auf die Patientendaten zu;
e) es wird nun geprüft, ob der Patient die unabdingbaren gesundheitlichen Voraussetzungen für die Durchführung des Eingriffs erfüllt;
f) es wird ferner überprüft, ob die Vorrichtung ordnungsgemäß funktioniert, d. h. ob die Filter frei sind und ob das Ansaugsystem auf effiziente Weise funktioniert;
g) der Saugmotor und der Hauptfilter werden in Betrieb genommen;
h) die Fachkraft handhabt die für die Durchführung der Behandlung erforderlichen Instrumente durch Einführen in die Arbeitsöffnungen (B.3);
i) die Luft und eventuelle Aerosole und/oder Absonderungen, die vom Patienten ausgehen, werden in die Luftauslässe (A.2) gesaugt;
j) die ausgestoßene Luft und eventuelle Aerosole und/oder Absonderungen, die vom Patienten ausgehen, werden zu den Lufteinlässen (C.1) geleitet;
k) die möglichen Verunreinigungen in der Luft, in den Aerosolen oder in den Absonderungen werden ganz oder teilweise durch die Filtermembran, die die Lufteinlässe (C.1) abdeckt, und durch die Filtermembran des Behälters (C) zurückgehalten;
l) schwerere Partikel, die aus den Filtermembranen entweichen können, werden an den Wänden des Behälters (C) aufgefangen;
m) die Luft wird erst zur Öffnung des Behälters (C.2) und anschließend zur Öffnung des Behälterträgers (A.6), danach zur Ansaugöffnung (A.4) und schließlich durch den Ansaugkanal zum Hauptfilter geleitet;
n) anschließend wird die Luft wieder in die Umgebung abgegeben.

## Revendications

1. Équipement destiné à empêcher la dispersion d'aérosol et/ou de sécrétions et à s'adapter à un fauteuil dentaire, composé d'un noyau (A) et d'une membrane (B),
- le noyau (A) comprenant un axe de rotation (A.3) et des raccords de tige (A.8) fixés à l'axe de rotation (A.3),
- la membrane (B) comprenant un couvercle (B.1) et une structure de support (B.2) constituée de tiges,
dans lequel
- le noyau (A) comprend des dispositifs pour s'adapter au fauteuil dentaire,
- le couvercle (B.1) est supporté par les tiges de la structure de support (B.2), couplé au noyau (A) par l'emboîtement des tiges de la structure de support (B.2) aux raccords de tige (A.8),
- la structure de support (B.2) tourne sur l'axe de rotation (A.3).

2. Équipement selon la revendication précédente, dans lequel l'équipement comprend en outre un réceptacle (C).

3. Équipement selon la revendication 2, dans lequel le réceptacle (C) est constitué d'un matériau absorbant et est doté d'une membrane filtrante à l'intérieur, sur toute sa longueur et toute sa largeur, s'adapte à un support de réceptacle (A.5) et est en contact avec la partie arrière d'une paroi avant du noyau (A).

4. Équipement selon l'une quelconque des revendications précédentes, dans lequel le noyau (A) comprend en outre au moins une sortie d'air (A.2) située dans une paroi arrière du noyau (A).

5. Équipement selon l'une quelconque des revendications précédentes, dans lequel le réceptacle (C) comprend au moins une entrée d'air (C.1) située dans une paroi avant du réceptacle (C).

6. Équipement selon l'une quelconque des revendications précédentes, dans lequel le nombre de sorties d'air (A.2) et le nombre d'entrées d'air (C.1) est le même, et chaque sortie d'air (A.2) est sensiblement alignée avec une entrée d'air (C.1).

7. Équipement selon l'une quelconque des revendications précédentes, dans lequel le réceptacle (C) comprend en outre une ouverture de réceptacle (C.2) pour l'introduction d'un tube d'évacuation, reliant le réceptacle (C) à un filtre total.

8. Équipement selon l'une quelconque des revendications précédentes, dans lequel le couvercle(B.1) est constitué d'un matériau transparent et malléable.

9. Équipement selon l'une quelconque des revendications précédentes, dans lequel la structure de support (B.2) est constituée d'un matériau malléable.

10. Équipement selon l'une quelconque des revendications précédentes, dans lequel la structure de support (B.2) intègre au moins trois tiges de la structure de support (B.2) .

11. Équipement selon l'une quelconque des revendications précédentes, dans lequel le noyau (A) comprend en outre au moins une ouverture de capteur (A.1) pour placer les capteurs mesurant les signes vitaux du patient et une console (A.7) où sont intégrés l'unité de traitement et un ensemble de boutons permettant de faire fonctionner l'équipement, un trou d'aspiration (A.4) et une ouverture du support de réceptacle (A.6).

12. Équipement selon l'une quelconque des revendications précédentes, dans lequel la membrane (B) comprend en outre au moins une ouverture de travail (B.3).

13. Équipement selon l'une quelconque des revendications précédentes, dans lequel l'équipement comprend en outre un moteur d'aspiration et un filtre total.

14. Méthode destiné à empêcher la dispersion d'aérosols et/ou de sécrétions dans une intervention médicale dentaire, comprenant les étapes suivantes:
a) montage d'un équipement selon les revendications précédentes dans un fauteuil dentaire;
b) avec la membrane (B) en position rétractée, le patient est assis dans le fauteuil du patient;
c) la membrane (B) est placée en position étendue, couvrant le visage et le tronc du patient;
d) le professionnel, au moyen de la console (A.7), accède aux données du patient par l'intermédiaire de l'unité de traitement;
e) on vérifie si le patient remplit les conditions de santé indispensables à la réalisation de l'intervention;
f) on vérifie également que l'équipement fonctionne correctement, à savoir que les filtres ne sont pas obstrués et que le système d'aspiration fonctionne efficacement;
g) le moteur d'aspiration et le filtre total sont mis en fonctionnement;
h) le professionnel insère la/les main(s) nécessaire(s), ainsi que les instruments requis pour l'exécution de la procédure à travers les ouvertures de travail (B.3);
i) l'air et les éventuels aérosols et/ou sécrétions expulsés par l'utilisateur sont aspirés dans les sorties d'air (A.2);
j) l'air expulsé et les éventuels aérosols et/ou sécrétions expulsés par l'utilisateur sont dirigés vers les entrées d'air (C.1);
k) les contaminants pouvant exister dans l'air, dans les aérosols ou dans les sécrétions sont, totalement ou partiellement, retenus sur la membrane filtrante recouvrant les entrées d'air (C.1) et dans la membrane filtrante équipant le réceptacle (C);
l) les particules plus lourdes qui peuvent s'échapper des membranes filtrantes sont piégées sur les parois du réceptacle (C);
m) l'air est ensuite dirigé vers l'ouverture du réceptacle (C.2), puis vers l'ouverture du support du réceptacle (A.6), puis vers le trou d'aspiration (A.4) et enfin, à travers le conduit d'aspiration, vers le filtre total;
n) l'air est ensuite réintroduit dans l'environnement.
